# EUROPEAN PATENT APPLICATION

(11) **EP 1 351 204 A1**
(43) Date of publication of application: **08.10.2003**
(21) Application number: 01900676.6
(22) Date of filing: 11.01.2001
(51) Int. Cl.: G07G 1/01

(54) **METHOD FOR OFFERING ADVERTISEMENT SERVICE**

(71) Applicant: Denaro Co., Ltd, Tokyo 101-0033 (JP)
(72) Inventor: TOYOOKA, Takamaro, Tokyo 108-0074 (JP)
(74) Representative: Weber, Dieter, Dr.
(86) International application number: JP0100099
(87) International publication number: WO02056268

(57) **Abstract**

The present invention is made up of settlement terminals 4 that can settle a commodity price and service charge, receive a card-type recording medium 40 provided with a rewritable display section 46 on its surface, perform prescribed processing for the settlement, and update the recording on the display section 46, and an advertisement distribution server computer 1 that has an advertisement database with which advertisement data are registered, is connected data-communicably to the settlement terminals 4, and distributes the registered advertisement data to the settlement terminals 4, in which the settlement terminals 4 update the recording of the display content on the display section 46 of the received card-type recording medium 40 to the advertisement content based on the advertisement data distributed by the advertisement distribution server computer 1.

## Description

### BACKGROUND OF THE INVENTION

### Technical Field

The present invention relates to a method for offering advertisement service in which an advertisement applicant who wants to perform an advertisement can execute the advertisement easily and quickly for holders of a card-type recording medium such as a credit card and a prepaid card.

### Prior Art

Conventionally, a method using publication such as a magazine and a newspaper and a method using a broadcasting medium such as television and radio have mainly used as a method of performing an advertisement by an advertisement provider.

In using the conventional advertisement, publication in particular, it is necessary to print printed matter as advertisement medium and deliver it, and there has been a problem that an advertisement could not be executed quickly and inexpensively.

On the other hand, it is more difficult than before for an issuer of the card-type recording medium such as the credit card and the prepaid card to ask members as a user for burden such as annual membership fee in providing the settlement services, which results in difficulty of securing profits, and a method of securing profits without depending on the burden to the members is anxiously desired.

Accordingly, the present invention has been created paying attention to the above-described problems, and the object of the invention is to provide the method for offering advertisement service capable of providing a method of executing advertisement quickly and inexpensively by the advertisement applicant and capable of securing profits without depending on the burden such as the annual membership fee to the members as the customer for the issuer of the card-type recording medium.

### SUMMARY OF THE INVENTION

To solve the problems, the method for offering advertisement service of the present invention is a method for offering advertisement service, which offers advertisement service aimed at the holders of the card-type recording medium to an advertisement client who is an access user, by using a server computer that is connected to a computer network made up of a plurality of computer terminals connected data-communicably and connected data-communicably to settlement terminals capable of using the card-type recording medium that can settle a commodity price or service charge, in which the settlement terminals can receive the card-type recording medium provided with a rewritable display section on its surface, and can rewrite recording on the display section, and the server computer at least includes: an advertisement receiving step to receive advertisement content to be recorded on the display section from an advertisement client; and a distribution step to distribute the advertisement data of the received advertisement content to the settlement terminals.

According to this characteristic, since the advertisement is received when the advertisement applicant accesses the server computer and the display section provided on the card-type recording medium updates the recording and displays the received advertisement when the card-type recording medium is used, the advertisement applicant does not need to fabricate/print printed matter performing advertisement to distribute it and can execute the advertisement quickly and inexpensively, and the issuer of the card-type recording medium can gain advertisement revenue based on the advertisement and can secure profits without depending on the burden of the annual membership fee or the like to the members as the customer.

In the method for offering advertisement service of the present invention, it is preferable that the server computer include: a registration step to register the advertisement received at the advertisement receiving step by associating with information capable of identifying the client of the advertisement; and a confirmation step to receive the information capable of identifying the client of the advertisement from the access user and to distribute the advertisement content of the advertisement client identified by the information in a confirmable manner by the advertisement client.

With this configuration, the advertisement client can access the server computer and sequentially confirm the advertisement content that he/she applied.

In the method for offering advertisement serviceof the present invention, it is preferable that the server computer include a changing step where the advertisement client can change the advertisement content registered at the registration step.

With this configuration, the advertisement client can access the server computer and sequentially change the advertisement content that he/she applied.

In the method for offering advertisement service of the present invention, it is preferable that the server computer have a customer database to identify the card-type recording medium and with which verification information showing whether or not the card-type recording medium is valid and personal information regarding the holder of the card-type recording medium are registered, include an advertisement specification receiving step to receive the information regarding the holder of the card-type recording medium, who is an advertisement subject to whom advertisement is performed from the advertisement client, and to register the received information regarding the holder of the card-type recording medium, who is the advertisement subject, to the advertisement data base by associating with the advertisement data, and an advertisement selecting step in which a card holder identified by the verification information, which is transmitted for verification from the settlement terminal, selects corresponding advertisement data or advertisement identification information capable of identifying the advertisement data from the advertisement database, and return the advertisement data or the advertisement identification information capable of identifying the advertisement data, which have been selected at the advertisement selecting step, to the settlement terminal.

With this configuration, the advertisement applicant, only by selecting the information regarding the card holder to whom he/she wants to perform advertisement at the advertisement specification receiving step, can execute advertisement only to a particular card holder for whom the effect of advertisement is anticipated, and efficient advertisement can be executed.

In the method for offering advertisement service of the present invention, it is preferable that one of the information regarding the holder be a commodity or a type of service that the holder purchased.

With this configuration, effective advertisement can be executed for a card holder who purchased a commodity or service which are highly related with a commodity or service, of which the advertisement applicant wants to advertise.

In the method for offering advertisement service of the present invention, it is preferable that the server computer have an advertisement specification changing step capable of changing the content of the information regarding the holder of the card-type recording medium, which has been received at the advertisement specification receiving step.

With this configuration, the advertisement applicant can access the server computer to change the information regarding the holder who is a distribution subject of the advertisement.

In the method for offering advertisement service of the present invention, it is preferable that the server computer include an aggregation information distributing step to aggregate distribution frequency of the received advertisement in a predetermined period and distribute the aggregation information to the computer terminal of the advertisement client.

With this configuration, the advertisement applicant can confirm accurate advertisement frequency of his/her advertisement in the predetermined period.

### BRIEF DESCRIPTION OF THE DRAWINGS

Fig. 1 is a block diagram showing the configuration of the advertisement distribution system in the embodiment of the present invention.
Fig. 2 is an external perspective view showing a POS terminal that is the settlement terminal used in the advertisement distribution system in the embodiment of the present invention.
Fig. 3 is a partially broken upper surface view showing an IC credit card that is the card-type recording medium used in the advertisement distribution system in the embodiment of the present invention.
Fig. 4 is a block diagram showing the configuration of the POS terminal used in the embodiment of the present invention.
Fig. 5 is a block diagram showing the configuration of a distribution server that is the server computer used in the embodiment of the present invention.
Fig. 6 is a view showing a rewriting status of advertisement on the display section of the IC credit card used in the embodiment of the present invention.
Fig. 7 is a view showing the entire processing content in the distribution server used in the embodiment of the present invention.
Fig. 8 is a view showing a customer database registered with the distribution server used in the embodiment of the present invention.
Fig. 9 is a view showing an advertisement database registered with the distribution server used in the embodiment of the present invention.
Fig. 10 is a view showing a main menu page in the distribution server in the embodiment of the present invention.
Fig. 11 is a view showing a menu selection page in the distribution server in the embodiment of the present invention.
Fig. 12 is a view showing an advertisement usage confirmation page (1) in the distribution server in the embodiment of the present invention.
Fig. 13 is a view showing an advertisement usage confirmation page (3) in the distribution server in the embodiment of the present invention.
Fig. 14 is a view showing an advertisement creation page (1) in the distribution server in the embodiment of the present invention.
Fig. 15 is a view showing an advertisement usage selection page in the distribution server in the embodiment of the present invention.
Fig. 16 is a view showing an advertisement status confirmation page in the distribution server in the embodiment of the present invention.

### BEST MODE FOR CARRYING OUT THE INVENTION

The embodiments of the present invention will be described based on the drawings.

### (Embodiments)

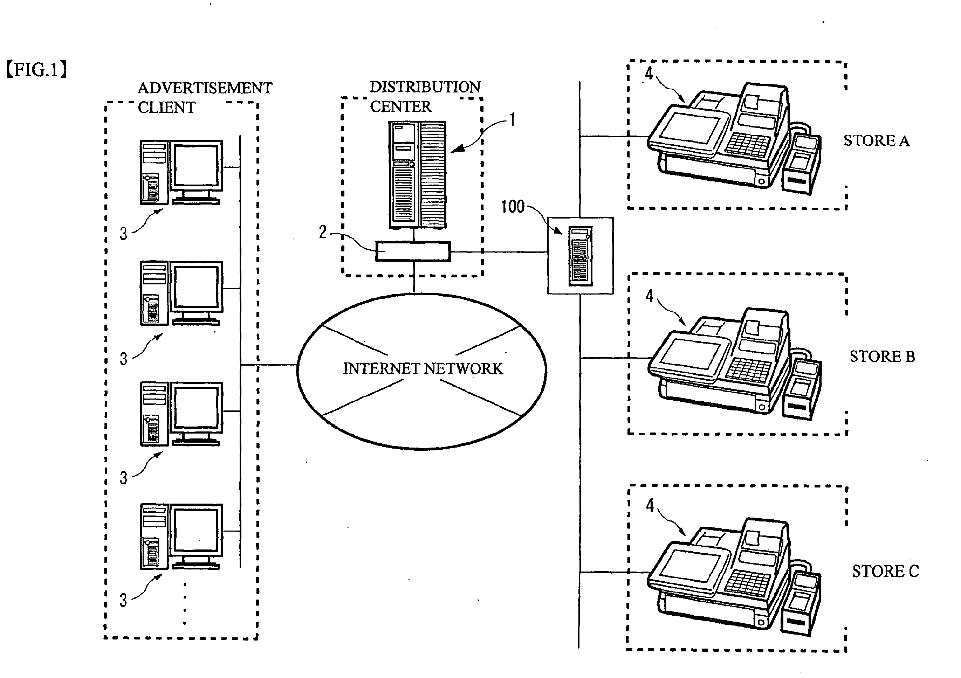

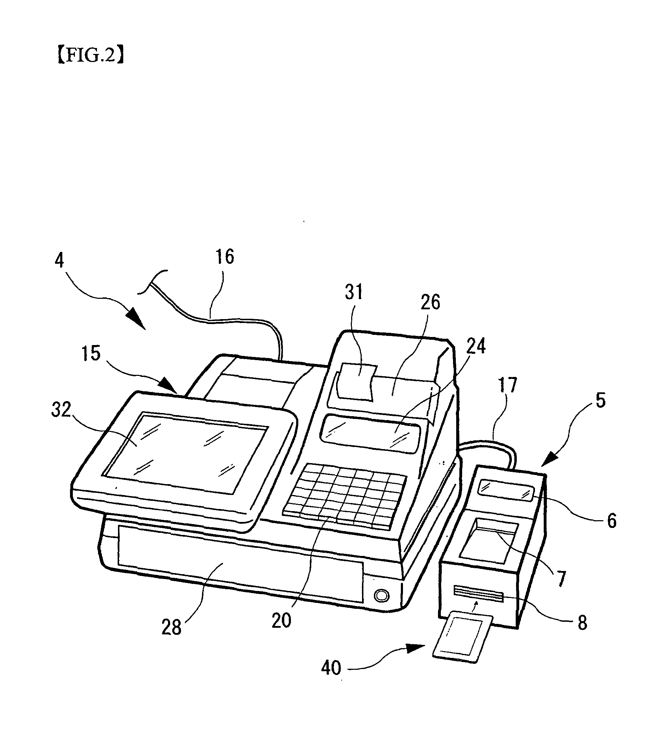

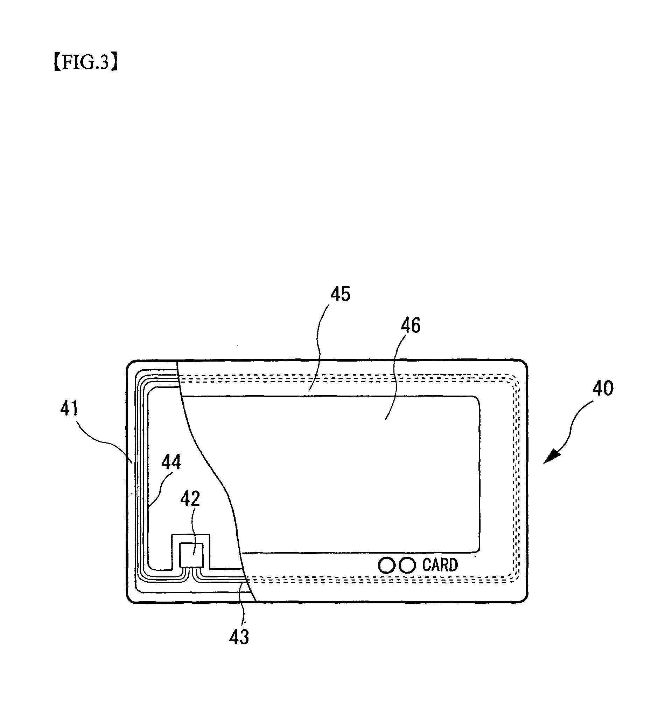

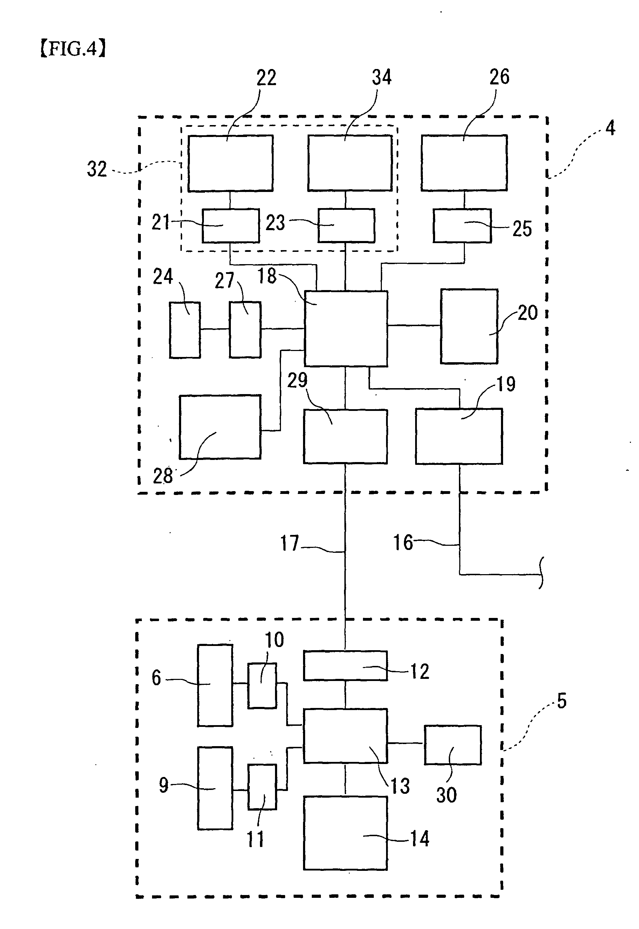

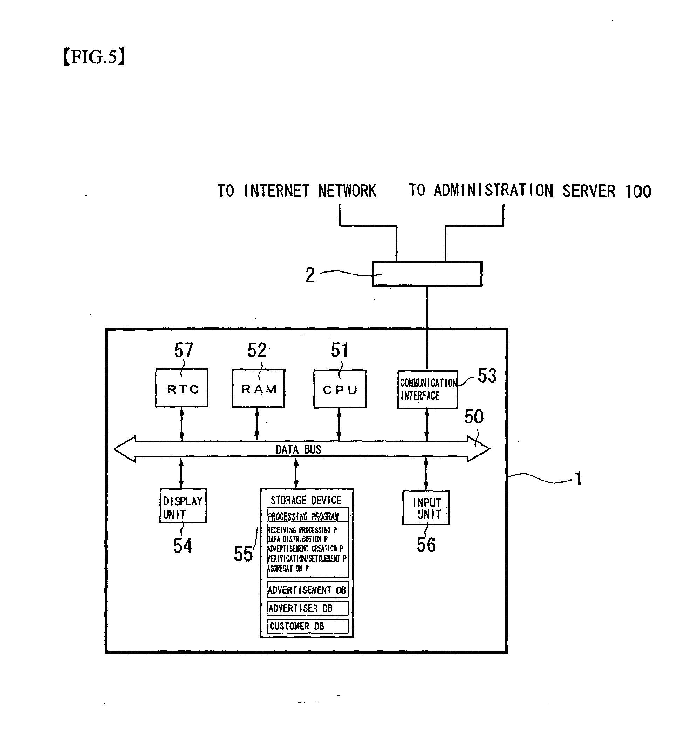

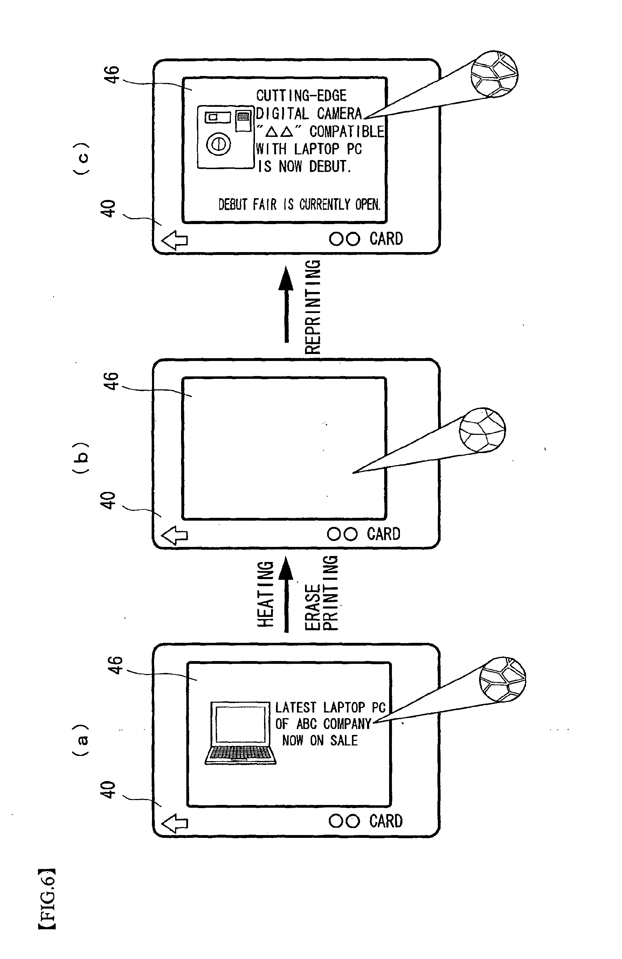

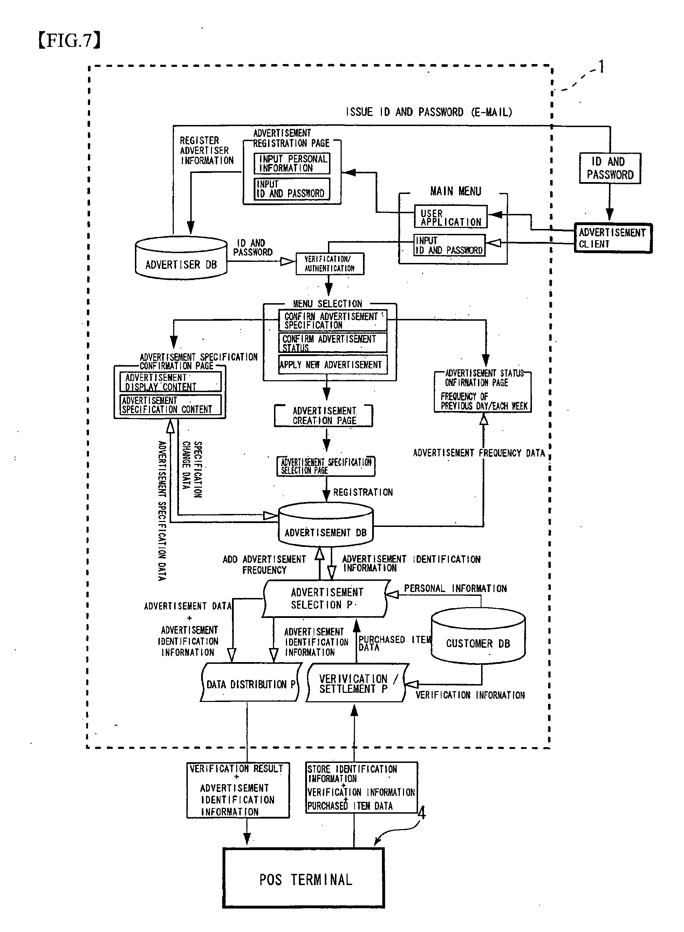

Fig. 1 is the block diagram showing the configuration of the advertisement distribution system of this embodiment, which has a distribution server that is the server computer to which the method for offering advertisement service of the present invention is applied, Fig. 2 is the external perspective view showing the POS terminal that is the settlement terminal used in the advertisement distribution system of this embodiment, Fig. 3 is the partially broken upper surface view showing the IC credit card that is the card-type recording medium used in the advertisement -distribution system of this embodiment, Fig. 4 is the block diagram showing the configuration of the POS terminal used in this embodiment, Fig. 5 is the block diagram showing the configuration of the distribution server that is the server computer used in this embodiment, Fig. 6 is the view showing the rewriting status of an advertisement on the display section of the IC credit card used in this embodiment, and Fig. 7 is the view showing the entire processing content in the distribution server.

The advertisement distribution system of this embodiment, as shown in Fig. 1, is mainly constituted by POS terminals 4 as the settlement terminals installed in each store a, b, c, ... where the IC credit card of this embodiment is used, a distribution server 1 that is connected via an administration server 100, which intensively administers the settlement status of each POS terminal 4 connected to each POS terminal 4 by an exclusive line and via a communication unit 2, and that is provided in a distribution center, and computer terminals 3 of each advertisement client, which are connected to the distribution server 1 via the communication unit 2 and the Internet network.

Firstly, description will be given for an IC credit card 40 that is the card-type recording medium used in this embodiment based on Fig. 3. The card is constituted that it has a predetermined thickness, an IC chip 42 having a non-volatile memory (not shown) built therein is mounted on a concave peripheral predetermined position of a resin base body 41, whose inside is in the concave shape, by a tape automated bonding (TAB) mounting, and a flexible printed board 44, which has a pattern coil 43 provided so as to run from the IC chip 42 along the periphery of the base body 41, is inserted therein, and the entire concave surface is covered with a top film 45. The IC credit card 40, by being inserted into a card unit 14 provided for a card processing section 5 of the POS terminal 4 (described later), electromagnetic wave output from the card unit 14 generates induced electromotive force in the pattern coil 43 to bias the IC chip 42 operatably, and is made to be a . non-contact IC card capable of executing each kind of data communication with the card unit 14 via the pattern coil 43 by electromagnetic wave in a non-contact manner.

Further, card number individually given to each IC credit card 40 is previously recorded in a non-rewritable manner in the non-volatile memory in the IC chip 42 of the IC credit card 40, and a display section 46 where rewritable recording of advertisement display can be made is provided on the top film 45 so as to position at the card center area avoiding the pattern coil 43.

The constitution of the display section 46 is that an aluminum deposition layer is formed on the surface of the top film 45 and a thermochromic film layer whose light transmittance changes by predetermined heat is provided thereon. In the thermochromic film layer, area heated to approximately 120°C that is a predetermined temperature forms gap therein to cause diffuse reflection in transmission light and becomes white, contrast is formed with other unheated area, and thus an image is formed, as shown in Fig. 6 (a). When the formed image is erased and rewriting is executed, the front surface of the formed image is heated to the temperature of approximately 90°C so that the gap in the area where the image has been formed restores to the original state and the contrast disappears, as shown in Fig. 6(b), and is ready to perform advertisement printing again as shown in Fig. 6(c). Then, a thermal head capable of executing the heat processing is provided inside the card unit 14 (described later) that can receive the IC credit card 40.

Next, description will be given for the POS terminal 4 as the settlement terminal used in this embodiment, where the IC credit card 40 is used. The POS terminal 4 used in this embodiment is mainly constituted by a POS register main body 15 having a register function, and a card processing section 5 capable of receiving the IC credit card 40.

On the top surface of the POS register main body 15, an input section 20 for inputting settlement amount or the like and a touch panel 32 for supporting the input section to simplify an operation associated with commodity settlement are provided, a display panel 24 to display a final settlement amount or the like and a printer section 26 to print a receipt 31 on which settlement content is recorded are provided, and its lower position is made to be a safe 28 for storing cash.

An insert slot 8 for the IC credit card 40 is provided at the front side of the card processing section 5 that is connected to the POS register main body 15 by connection cable 17, and on the upper side a statement discharge slot 7 from which usage details are printed and discharged and a liquid crystal display section 6 on which the content of processing status or the like is displayed in a message.

The constitution of the card processing section 5 used in this embodiment is as shown in Fig. 4, and it incorporates a communication section 12 for performing data communication with the POS register main body 15, a display driver 10 to control display of the liquid crystal display section 6, a printer unit 9 connected to the statement discharge slot 7 to print on a statement paper, a printer driver 11 to control printing of the printer unit 9; the card unit 14, which is connected to the insert slot 8 to bias the inserted IC credit card 40 by electromagnetic wave, capable of reading out record information recorded in the IC credit card 40 and writing new data in a non-contact manner, and capable of printing/erasing to the rewritable display section 46 provided on the surface of the inserted IC credit card 40, a non-volatile memory 30 as a storage section that stores the advertisement data added with an advertisement ID by which the advertisement can be identified, which is distributed from the distribution server, and that stores control program or the like executed by a micro processing unit (described later), and a micro processing unit (MPU) 13 connected to each section to control its operation. The section 5 is designed to read outs the verification information such as the card number from the IC credit card 40 received at the card unit 14 to output to the POS register main body 15, discharge the IC credit card 40 after printing the advertisement that corresponds to the advertisement ID attached to the verification result sent from the distribution server, and print its usage details to issue it.

Further, the constitution of the POS register main body 15 to which the card processing section 5 is connected is as shown in Fig. 4, where a liquid crystal panel 22, a liquid crystal driver 21, a position detection panel 34, a position detection driver 23 , which constitute a touch panel 32, a printer section 26 that prints the receipt 31, a printer driver 25 that controls printing of the printer section 26, a display panel 24, a display driver 27 that controls display on the display panel, the input section 20 that consists of a group of each kind of keys, the safe 28, a first communication section 29 that executes data communication with the card processing section 5 through the connection cable 17, a second communication section 19 that performs data communication with the administration server 100 and the distribution server 1 through exclusive line 16, and a micro processing unit (MPU) 18 connected to each section to control its operation are connected as shown in Fig. 4, and thus regular settlement by cash is made possible. By inserting the IC, credit card 40 into the card processing section 5, the section 15 transmits the type (name) of a purchased commodity and amount information along with the verification information such as the card number read out at the card processing section 5 to the distribution server 1 via the exclusive line 16 and the administration server 100, and it can also execute settlement by the IC credit card 40 when the distribution server 1 returns the verification result to permit settlement.

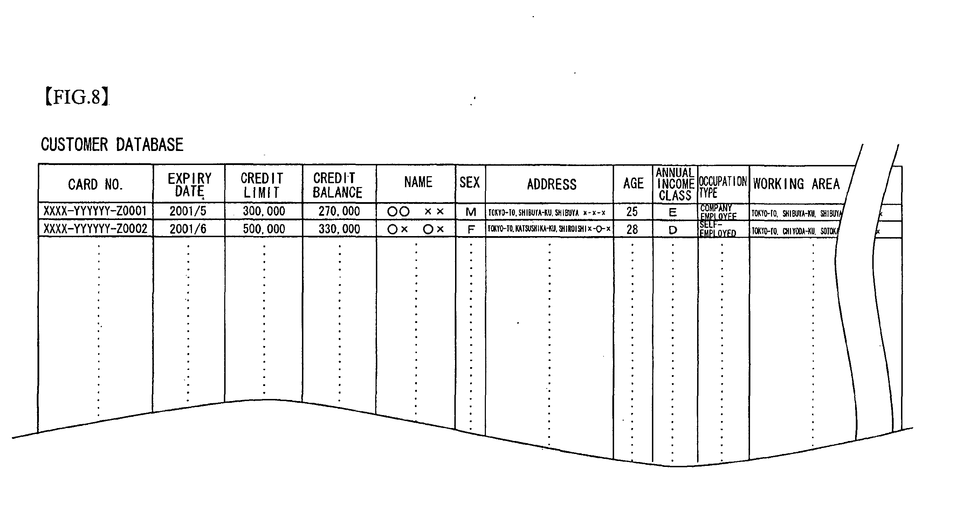

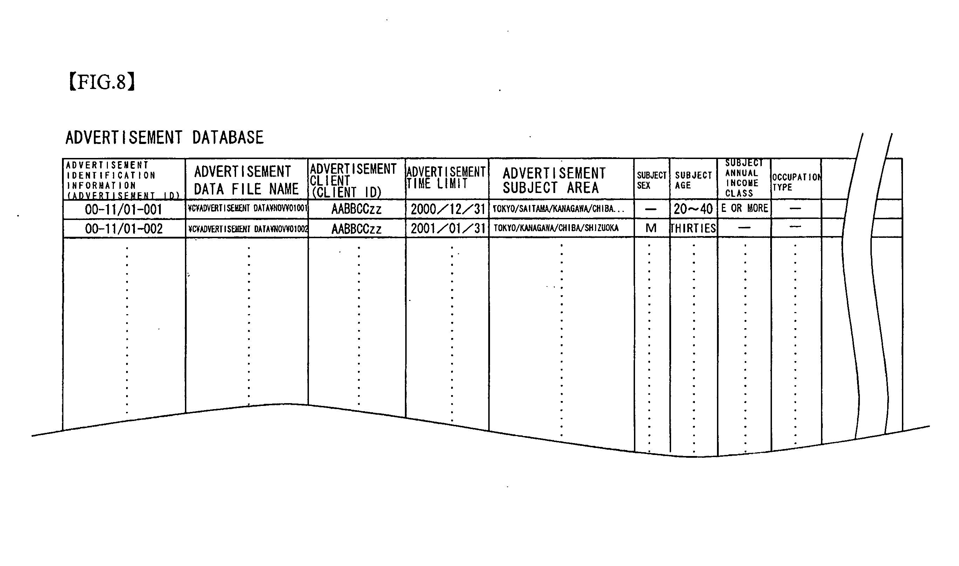

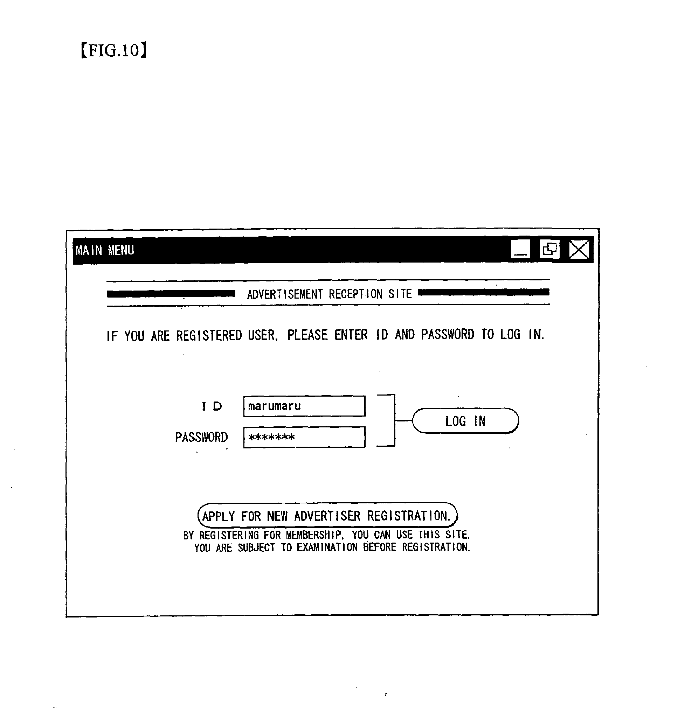

Next, the distribution server 1 installed in the distribution center of this embodiment is in the constitution shown in Fig. 5, and is a regular computer having relatively superior processing capability, in which a central processing unit (CPU) 51 that executes each kind of processing such as receiving processing of an advertisement from the computer terminal 3 of the advertisement client, creation processing of an advertisement, aggregation processing of advertisement number, verification/settlement processing for the verification information from each POS terminal 4, and distribution processing to distribute the advertisement data and advertisement identification information (advertisement ID), based on corresponding processing program, a RAM 52 used as a working memory or the like of the CPU 51, a real-time clock (RTC) 57 capable of outputting current time information and calendar information such as a day of an arbitrary date, an input unit 56 such as a keyboard, a display unit 54 such as a display, a communication interface 53 that is connected to the communication unit 2 and executes two-way data communication with the computer terminal 3 of the advertisement client, which has accessed via the Internet network, together with each POS terminal 4 through the exclusive line and the administration server 100, and a storage device 55 that is made up of a magnetic disc or a photomagnetic disc and stores each kind of processing program that the central processing unit (CPU) 51 executes, the advertisement database (DB) created as shown in Fig. 9 or uploaded from the computer terminal 3 of the advertisement client, in which advertisement data, the advertisement identification information (advertisement ID) to identify the advertisement data, expire date of an advertisement, the specification content of the advertisement for a subject area are associated and registered, an advertiser DB in which the personal information, a user ID, a password and the like of a website user who is the advertisement client, a customer database (DB) in which the personal information regarding a customer (member) who is the holder of the IC credit card 40 and each pieces of information such as the card number of the IC credit card 40 are associated and registered as shown in Fig. 8, and the like, are connected to data bus 50 that transmits/receives data in the distribution server 1.

In the following, flow in which the distribution server 1 receives an advertisement from the advertisement client and the received advertisement based on the advertisement data is executed on the display section 46 of the IC credit card 40, with reference to the flowchart showing the entire processing in Fig. 7 and each display page.

First, when the advertisement client wants to apply for an advertisement, only the advertisement clients who registered as the advertiser are allowed to apply for a new advertisement in order to avoid an improper advertisement from being executed in this embodiment, and whether the advertisement client is a company or an individual who does not execute the improper advertisement or not is preliminary examined, at the time of advertiser registration.

In the case where an-access user accesses the distribution server 1 of this embodiment through the-Internet network, a main menu page shown in Fig. 10 is displayed, and when only the advertisement client who previously registered as the advertiser enters the ID and the password, which are issued to each registered advertiser, whether or not the ID and password entered match the ID and password registered with the advertiser DB is compared, and the access user can log in the distribution server 1 if the comparison matches.

Further, an access user who has not registered as the advertiser who wants to apply for new membership registration selects and enters "Application for new advertiser registration" to proceed to an advertiser registration page, and enters the ID and password that he/she desires along with the name of a corporation or an individual, and the personal information such as name, address and electronic mail, on the advertiser registration page to perform advertiser registration.

Advertiser registration information entered at the advertiser registration is examined on a predetermined examination standard whether or not the new applicant is an improper corporation or user along with whether or not the ID and password overlap the ones of other advertisers already registered, the ID and password are issued to the new advertiser via e-mail if the applicant satisfies the examination standard.

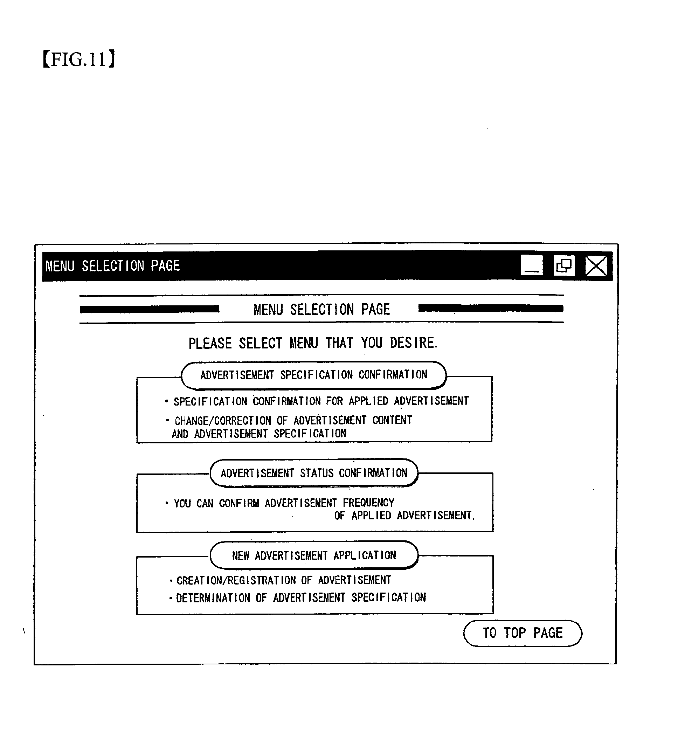

The registered advertiser who logged in by entering the ID and password selects a desired menu on a menu selection page shown in Fig. 11. The menu selection page is provided with "Advertisement specification confirmation" item where the content and the specification content of advertisement that has already been applied for can be confirmed, "Advertisement status confirmation" item where the number that the applied advertisement has been executed can be confirmed, and "New advertisement application" item where a new advertisement can be created and the specification of the advertisement can be determined.

Firstly, in the case where the registered advertiser applied for advertisement in the past and wants to confirm the applied content, he/she selects and enters the "Advertisement specification confirmation" item.

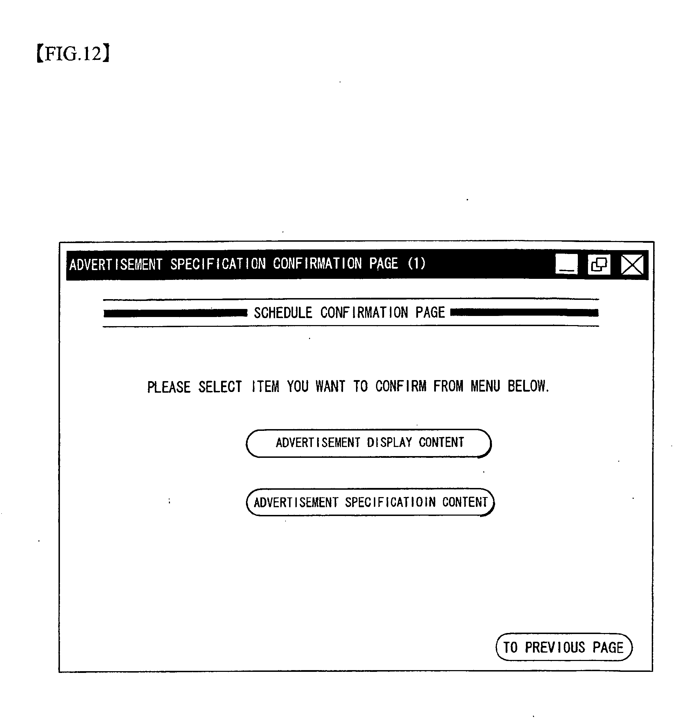

On entering the item, advertisement specification confirmation page (1) shown in Fig. 12 is displayed, and when the advertiser wants to confirm the advertisement content actually displayed on the display section 46 of the IC credit card 40, he/she selects and enters "Advertisement display content" item to display the display content on advertisement specification page (2) (not shown) where the content is displayed as the displayed state on the display section 46, and by selecting "edit" item provided on the advertisement specification confirmation page (2), editor program is activated to enable the advertiser to edit the advertisement content such as layout and change.

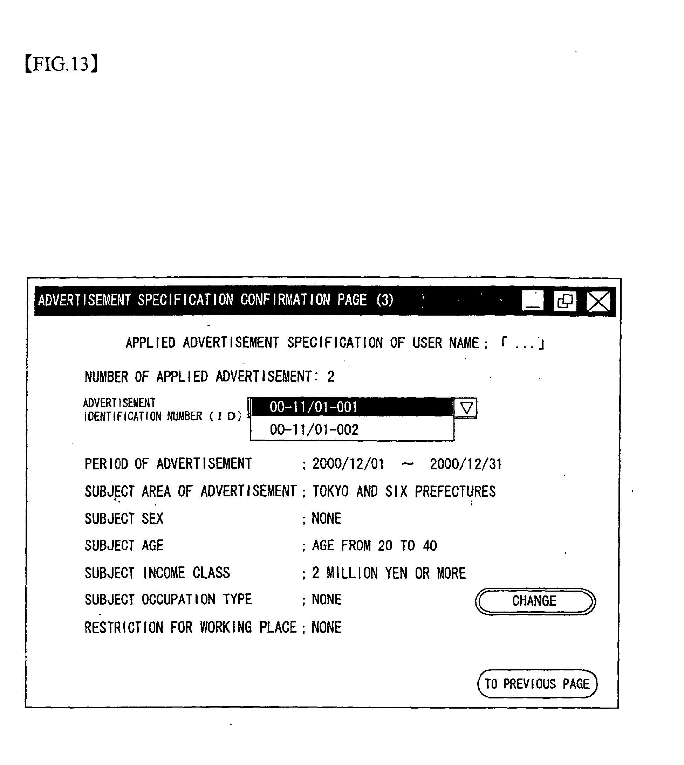

Further, when the registered advertiser wants to confirm the specification of an applied advertisement, he/she selects and enters "Advertisement specification content" item on the advertisement specification confirmation page (1) to display the number of advertisements applied, the period of advertisement, the subject area of advertisement, and the specified content of sex, age, annual income, occupation type, and a working place of a customer who is the holder of the IC credit card 40 as an advertisement subject as shown in Fig.13 , and when the advertiser wants to change the specification content, he/she selects "change" provided on the page so that the specification content can be changed for every item.

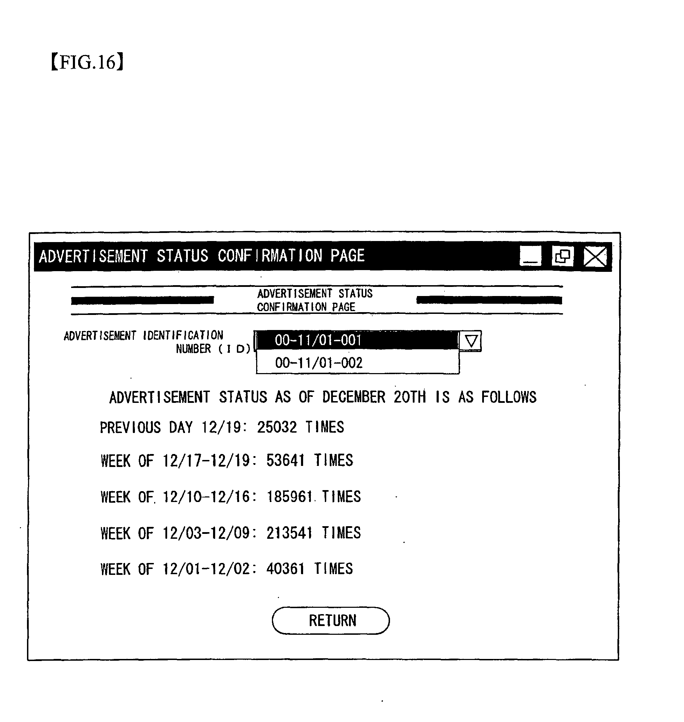

Furthermore, when there is an advertisement already applied, or the registered advertiser wants to confirm the advertisement frequency of the applied advertisement, he/she selects and enters "Advertisement status confirmation" item on the menu selection page, and the advertisement frequency data registered with the advertisement database is displayed as shown in Fig. 16 so that the registered advertiser can confirm the advertisement frequency on week basis and also can confirm the advertisement frequency on the previous day.

As described in the embodiments, it is preferable to enable the registered advertiser to sequentially confirm the advertisement frequency of the advertisement applied because the registered advertiser easily grasp the advertisement status and it is an important guideline for changing the advertisement specification according to the advertisement status, but the present invention is not limited to this.

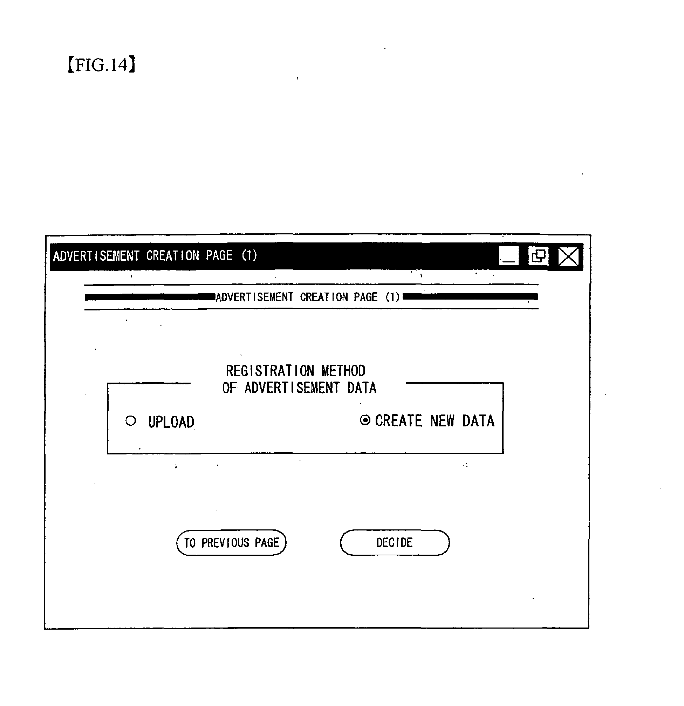

Further, when the registered advertiser wants to apply a new advertisement, he/she selects and enters "New advertisement application" item on the menu selection page to display advertisement creation page (1) shown in Fig. 14, and selects a registration method of the advertisement data.

The advertiser selects "upload" when the new advertisement data have been previously created, or checks "create new data" item when the data have not been created and data are newly created, and enters "decide".

When "upload" is selected on the previous step, a screen automatically switches to a screen specifying a file of the previously created advertisement data to be transmitted, and an e-mail attached with the advertisement data is transmitted to the distribution server 1 by specifying the file.

Furthermore, when "create new data" item is selected on the previous step, advertisement creation program (editor) is activated to execute layout creation such as posting of an image and typing of a text, and the advertisement content printed on the display section 46 can be thus created.

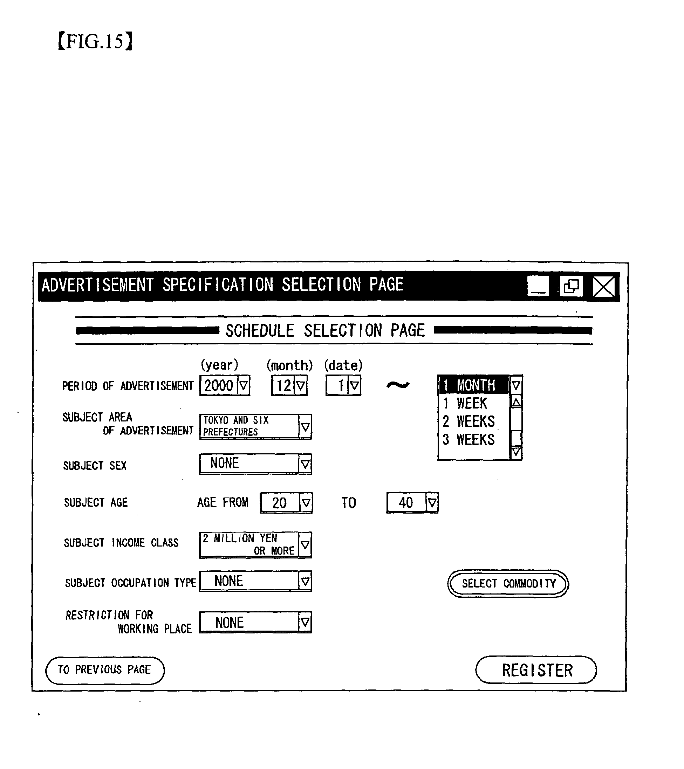

The advertisement specification selection page shown in Fig. 15 is displayed after completing "upload" or creating the advertisement content, and each specification of the advertisement, that is, in this embodiment, the items of period, subject area, sex, age, annual income, occupation type, and working place can be selected on the advertisement specification selection page. When "specify commodity" provided on the page is selected and entered, a commodity whose advertisement is executed can be specified in the case where a purchased commodity matches the specified content.

As a specifying method of commodities, high advertisement effect is obtained by specifying a commodity highly related to the commodity to be advertised, more specifically by specifying "camera" as the commodity in the case of the advertisement of a film since it is more advertisement effective to execute the advertisement of the film for a person who purchased a camera. For example, in the case of executing advertisement of a digital camera of laptop personal computer compatible, when a laptop personal computer is specified as the specified commodity, the advertisement of a personal computer is displayed at the time of settlement of previous shopping, as shown in Fig. 6, and then, when the holder of the card has newly purchased a laptop personal computer due to the advertisement, the advertisement of the digital camera is executed on the display section 46 at the time of settlement as shown in Fig. 6(c).

As described, it is preferable to decide a subject to whom the advertisement is executed based on the commodity that the subject purchased because the advertisement effect can be improved, but the present invention is not limited to this.

The content of the selected advertisement specifications and the advertisement data "uploaded" or newly created are individually added with the advertisement ID to make the advertisement identifiable and registered with the advertisement database (DB), the new advertisement data and the advertisement ID are periodically distributed to each POS terminal 4 by distribution program, and the distributed advertisement ID and the advertisement data are stored in the non-volatile memory 30 in the card processing section 5.

In the following, description will be given for the flow where the advertisement is executed on the IC credit card 40 in the advertisement distribution system of this embodiment. When the holder of the IC credit card 40 brings a commodity and the card to the POS terminal 4 for settlement, the purchased commodity is specified on the touch panel to display the commodity name and its amount on the display panel 24.

When a store clerk inserts the IC credit card 40 into the insert slot 8 for settlement, the card number of the inserted IC credit card 40 is read out, the card number data is output from the card processing section 5 to the POS register main body 15, and the card number data are transmitted along with the type (product name) of the purchased commodity, price data, and identification data of a store to the distribution server 1 via the administration server 100.

In the distribution server 1, verification/settlement program verifies whether or not the card number that is the verification information is a valid one registered with the customer DB, and executes whether the expiry date of the card is due or a purchased amount exceeded a credit limit, advertisement selection program searches whether or not there is an advertisement corresponding to the purchased commodity (service) or whether or not an advertisement that matches the personal information of the customer who purchased the commodity exists. If a plurality of advertisements exist, the advertisement ID of an advertisement having many matched items is selected and sent to data distribution program, and the frequency data of the advertisement in the advertisement database is updated. The advertisement frequency is aggregated by aggregation program using the updated frequency data, and displayed on the advertisement status confirmation page.

Further, regarding the advertisement ID of the selected advertisement, the advertisement ID is returned along with the verification result (settlement is permitted or not) based on the verification information to the POS terminal 4 by the data distribution program.

The returned advertisement ID is output to the card processing section 5, the advertisement data corresponding to the advertisement ID is read out from the non-volatile memory 30, printed on the display section 46 by the card unit 14, and then the IC credit card 40 is returned.

As described in the embodiments, it is preferable to previously distribute each advertisement data to each POS terminal 4 to store the advertisement data in the non-volatile memory 30 and to return only the advertisement ID as described above on actual advertisement occasion because it is not necessary to sequentially distribute the advertisement data having relatively large data capacity and the advertisement can be quickly printed, but the present invention is not limited to this. If communication capacity is large enough, the advertisement data may be distributed every time.

According to this embodiment, as described above, the advertisement client does not need to fabricate nor distribute the printed matter of advertisement, he/she can not only execute advertisement easily and quickly, but also the administration company of cards (issuing company) can lighten the burden of annual membership fee or the like to the customer (member), for example, by devoting the advertisement revenue to the annual membership fee or the like.

As described above, the embodiments of the present invention have been described based on the drawings, but the present invention is not limited to the embodiments, and it is needless to say that modifications and additions without departing from the scope of the present invention are included in the present invention.

For example, in the embodiments, the distribution server 1 is connected to the Internet network via the communication unit 2 to receive the application and change of the advertisement from the computer terminal 3 of the advertisement client, which is preferable because troubles can be reduced in registration and update of the advertisement data of the advertisement client. However, the present invention is not limited to this, and the registration of the advertisement data may be executed only in the distribution server 1.

Further, in the embodiments, the items regarding the customer to whom advertisement is performed can be specified as the advertisement specification, which is preferable because advertisement can be efficiently executed for those whom the advertisement client wants to perform advertisement, but the present invention is not limited to this.

Furthermore, in the embodiments, although setting and change of the advertisement specification can be executed from the computer terminal 3 of the advertisement client, the present invention is not limited to this.

Moreover, in the embodiments, although the advertisement frequency or the like can be confirmed on the advertisement status confirmation page, the present invention is not limited to this, and such information may be transmitted via e-mail to the computer terminal 3 of the advertisement client.

Further, in the embodiments, although an IC card is used as the card-type recording medium, the present invention is not limited to this, and it goes without saying that a magnetic card or the like regularly used in credit cards or the like may be acceptable.

Furthermore, although the credit cards are exemplified in the embodiments, the present invention is not limited to this, and any recording medium capable of settling a purchased commodity or service is good. It is needless to say that a prepaid card or the like, for example, is included in the card-type recording medium of the present invention.

Still further, in the embodiments, the display section 46 has a constitution that the thermochromic film layer is provided on the surface of the aluminum deposition layer, but the present invention is not limited to this, and any display section that is rewritable repetitively and capable of displaying a display in a visibly recognizable manner can be used.

### Description of Reference Numerals

- 1:: distribution server (server computer)
- 2:: communication unit
- 3:: computer terminal
- 4:: POS terminal (settlement terminal)
- 5:: card processing section
- 6:: liquid crystal display section
- 7:: statement discharge slot
- 8:: insert slot
- 9:: printer unit
- 10:: display driver
- 11:: printer driver
- 12:: communication section
- 13:: micro processing unit (MPU)
- 14:: card unit
- 15:: register main body
- 16:: exclusive line
- 17:: connection cable
- 18:: micro processing unit (MPU)
- 19:: second communication section
- 20:: input section
- 21:: liquid crystal driver
- 22:: liquid crystal panel
- 23:: position detection driver
- 24:: display panel
- 25:: printer driver
- 26:: printer section
- 27:: display driver
- 28:: safe
- 29:: first communication section
- 30:: non-volatile memory
- 31:: receipt
- 32:: touch panel
- 34:: position detection panel
- 40:: IC credit card
- 41:: base body
- 42:: IC chip
- 43:: pattern coil
- 44:: flexible printed board
- 45:: top film
- 46:: display section
- 50:: data bus
- 51:: central processing unit (CPU)
- 52:: RAM
- 53:: communication interface
- 54:: display unit
- 55:: storage device
- 56:: input unit
- 100:: administration server

## Claims

1. A method for offering advertisement service, which offers advertisement service aimed at the holders of a card-type recording medium to an advertisement client who is an access user, by using a server computer that is connected to a computer network made up of a plurality of computer terminals connected data-communicably and connected data-communicably to settlement terminals capable of using said card-type recording medium that can settle a commodity price or service charge,
wherein said settlement terminals receive said card-type recording medium provided with a rewritable display section on its surface, and are capable of rewriting recording on the display section, and
said server computer at least includes:
an advertisement receiving step to receive advertisement content to be recorded on said display section from an advertisement client; and
a distribution step to distribute the advertisement data of the received advertisement content to said settlement terminals.

2. The method for offering advertisement service according to Claim 1,
wherein said server computer includes:
a registration step to register the advertisement received at said advertisement receiving step by associating with information capable of identifying the client of the advertisement; and
a confirmation step to receive the information capable of identifying the client of the advertisement from the access user and to distribute the advertisement content of the advertisement client identified by the information in a confirmable manner by the advertisement client.

3. The method for offering advertisement service according to Claim 2, wherein said server computer includes a changing step where the advertisement content registered at said registration step is changeable by the advertisement client.

4. The method for offering advertisement service according to any one of Claims 1 to 3,
wherein said server computer has a customer database to identify said card-type recording medium and with which verification information showing whether or not the card-type recording medium is valid and personal information regarding the holder of the card-type recording medium are registered, includes:
an advertisement specification receiving step to receive the information regarding the holder of the card-type recording medium, who is an advertisement subject to whom advertisement is performed from the advertisement client, and to register the received information regarding the holder of the card-type recording medium, who is the advertisement subject, to the advertisement data base by associating with the advertisement data, and
an advertisement selecting step in which a card holder identified by the verification information, which is transmitted for verification from said settlement terminal, selects corresponding advertisement data or advertisement identification information capable of identifying the advertisement data from said advertisement database, and
returns the advertisement data or the advertisement identification information capable of identifying the advertisement data, which have been selected at the advertisement selecting step, to said settlement terminal.

5. The method for offering advertisement service according to Claim 4, wherein one of the information regarding said holder is a commodity or a type of service that the holder purchased.

6. The method for offering advertisement service according to any one of Claims 4 and 5, wherein said server computer includes an advertisement specification changing step capable of changing the content of the information regarding the holder of the card-type recording medium, which has been received at said advertisement specification receiving step.

7. The method for offering advertisement service according to any one of Claims 1 to 6, wherein said server computer includes an aggregation information distributing step to aggregate distribution frequency of the received advertisement in a predetermined period and distribute the aggregation information to said computer terminal of the advertisement client.
